# FASCICULE DE BREVET EUROPEEN

(11) **EP 1 943 527 B1**
(45) Date de publication et mention de la délivrance du brevet: **26.07.2017**
(21) Numéro de dépôt: 06807727.0
(22) Date de dépôt: 03.11.2006
(51) Int. Cl.: G01P 15/093, G01H 9/00

(54) **ACCELEROMETRE POUR LA MESURE DES VIBRATIONS AVEC CAPTEUR OPTIQUE**
BESCHLEUNIGUNGSMESSER ZUR MESSUNG VON VIBRATIONEN MIT EINEM OPTISCHEN SENSOR
ACCELEROMETER FOR MEASURING VIBRATIONS WITH AN OPTICAL SENSOR

(30) Priorité: 04.11.2005 CH 17732005
(43) Date de publication de la demande: 16.07.2008
(73) Titulaire: MC-Monitoring S.A., 1762 Givisiez (CH)
(72) Inventeur: COCHARD, Michel, CH-1752 Villars-sur-glâne (CH)
(74) Mandataire: BOVARD AG
(86) Numéro de dépôt international: PCT/EP2006/068057
(87) Numéro de publication internationale: WO 2007/051831

(56) Documents cités:
- EP-A1- 0 251 048
- EP-A1- 0 791 812
- US-A- 3 224 279
- US-A- 3 961 185
- US-A- 4 414 471
- US-A- 4 899 125
- US-A- 5 276 322
- US-A- 5 557 099
- US-A- 5 939 632
- US-A- 6 031 946
- KALENIK J ET AL: "A cantilever optical-fiber accelerometer" SENSORS AND ACTUATORS A, ELSEVIER SEQUOIA S.A., LAUSANNE, CH, vol. 68, no. 1-3, 15 juin 1998 (1998-06-15), pages 350-355, XP004139858 ISSN: 0924-4247

## Description

L'invention se rapporte à un dispositif de détection de l'accélération d'un mobile déplacé par rapport à un référentiel.

L'invention intéresse particulièrement, mais non limitativement, la construction d'accéléromètres.

L'invention s'applique spécialement à la construction d'accéléromètres de type optique.

De tels dispositifs sont utilisés pour, au moins, détecter la vibration d'un mobile par rapport à un référentiel et, éventuellement, mesurer des paramètres du phénomène vibratoire concerné.

Dans le domaine des machines électriques tournantes, notamment des alternateurs ou des moteurs, il est fréquent de devoir surveiller le taux de vibration de l'ensemble ou d'éléments portés à un potentiel électrique élevé afin de pouvoir réagir pour s'opposer à des phénomènes susceptibles d'altérer le fonctionnement de ces machines.

Avec ce type de machines, il est nécessaire de mettre en oeuvre des dispositifs de détection d'accélération dont le fonctionnement est insensible aux champs électriques et magnétiques.

Ces contraintes ont conduit à la conception et à la réalisation d'accéléromètres optiques réalisés en matériaux électriquement et/ou magnétiquement insensibles et notamment en matériaux isolants dans ces domaines.

Des accéléromètres adaptés à cette utilisation sont connus et ont été décrits, notamment, dans les brevets US-A 4649271 et CA-A 1218725.

Une solution techniquement avantageuse a également été proposée par Ralph H. Mc Kosky of TVA Technology Advancements dans une publication de l'Université John Caroll aux Etats-Unis et plus précisément, par le « Science Center of John Carroll University, Cleveland, OH 44118, Etats-Unis ». Cette solution technique met en oeuvre un dispositif comprenant :
- un châssis destiné à être fixé au mobile dont il y a lieu de détecter l'accélération,
- un élément flexible qui, constitué au moyen d'une fibre optique, présente deux extrémités dont une est libre et l'autre est fixée au châssis de manière telle que l'élément flexible puisse fléchir sous l'influence de déplacements de ce châssis et que l'extrémité libre puisse se déplacer lors de la flexion dudit élément flexible,
- connecté à l'élément flexible, un organe d'émission d'une radiation lumineuse dans cet élément optique, de telle façon qu'un faisceau lumineux, dit premier faisceau lumineux, puisse être émis par l'extrémité libre de cet élément flexible,
- solidaire du châssis, un organe de réflexion du premier faisceau lumineux en un autre faisceau lumineux, dit second faisceau, vers l'extrémité libre de l'élément flexible, de manière telle que de la lumière issue d'une face terminale de cette extrémité libre puisse, au moins à un instant déterminé de la vibration de l'élément flexible être réfléchie à travers la face terminale, à l'intérieur de cet élément flexible, pour le parcourir en chemin inverse,
- connectée à l'élément flexible, une installation de détection du déplacement de l'extrémité libre de l'élément flexible, notamment par détection de la variation d'intensité de la lumière réfléchie par l'organe de réflexion.

Cette solution technique a ses avantages, mais on lui reproche d'être de construction délicate et de plus de ne pas offrir la possibilité de privilégier la détection de vibrations dans une direction privilégiée.

Dans le brevet des Etats-Unis d'Amérique US 5 939 632, plusieurs accéléromètres électriques sont décrits. Dans l'un d'entre eux, la masse sismique est portée par deux bras flexibles, qui sont parallèles entre eux de manière à conférer une rigidité accrue parallèlement au plan les contenant.

Dans l'article « A cantilever optical-fiber accelerometer » de J. Kalenik et R. Pajak, publié dans SENSORS AND ACTUATORS A, ELSEVIER SEQUOIA S.A., LAUSANNE, CH, vol. 68, no. 1-3, 15 juin 1998, pages 350-355, XP004139858, ISSN : 0924-4247, il est proposé de coller ensemble deux fibres optiques côte à côte, dans un accéléromètre optique où ces deux fibres ont une extrémité libre pour pouvoir se déformer en fonction des accélérations reçues. La fibre optique additionnelle limite le mouvement de l'extrémité libre à une seule direction.

Un résultat que l'invention vise à obtenir est un dispositif de détection de vibrations qui soit de construction particulièrement simple et qui présente une sensibilité dans une direction privilégiée.

A cet effet, l'invention a pour objet un dispositif selon la revendication 1.

L'invention sera bien comprise à la lecture de la description ci-après faite à titre d'exemple non limitatif en regard du dessin ci-annexé qui représente schématiquement
Figure 1 : un dispositif selon l'invention, vu de dessus et partiellement en coupe,
Figure 2 : le dispositif de la figure 1, vu latéralement et partiellement en coupe,

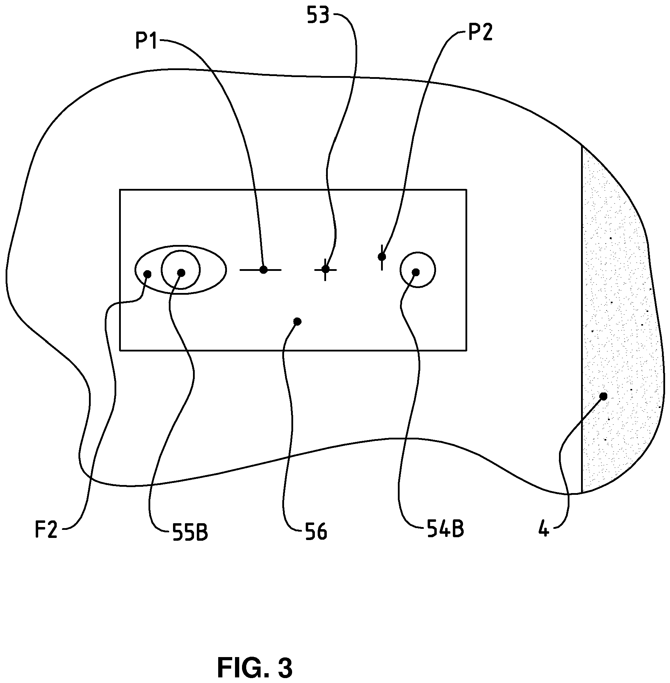

Figure 3 : à plus grande échelle, une vue selon G d'une partie du dispositif représenté en figure 2.

En se reportant au dessin, on voit un dispositif 1 de détection de l'accélération d'un support 2 qui est mobile par rapport à un référentiel 3.

Il faut considérer que le référentiel 3 comprend au moins une direction privilégiée Z de déplacement du support 2, mais le dispositif 1 selon l'invention convient particulièrement lorsque le support 2 est mobile dans un plan ou dans l'espace et c'est d'ailleurs pour ce type de situation qu'il a été conçu.

Sur le dessin, on a d'ailleurs représenté un référentiel 3 défini par trois directions Z orthogonales.

Le dispositif 1 de détection comprend :
- un châssis 4 destiné à être fixé sur le support 2,
- un élément flexible 5, allongé et présentant deux extrémités opposées 51, 52, dont une première extrémité 51 qui est liée au châssis 4 et une seconde extrémité 52 qui, lors de la flexion de l'élément flexible 5 est libre de se déplacer par rapport à un axe de référence 53 s'étendant longitudinalement à l'élément flexible 5.

Tel que cela apparaît sur les dessins, le dispositif 1 est destiné à être utilisé conjointement à une installation 6 de détection du déplacement, notamment de la vibration de la seconde extrémité 52 de l'élément flexible 5.

De manière notable, l'élément flexible 5 est constitué de deux parties 54, 55 sensiblement identiques entre elles, dites première partie 54 et seconde partie 55, lesquelles,
- sont chacune de forme substantiellement allongée et sont flexibles,
- ont leurs axes longitudinaux 54A, 55A qui s'étendent sensiblement dans un même plan P1, dit premier plan P1,
- sont maintenues écartées d'une distance prédéterminée, dite première distance D1, de manière à déterminer un plan privilégié de déformation, dit second plan P2, notamment approximativement perpendiculaire au premier plan P1 et parallèle à l'axe de référence 53.

L'homme du métier est à même de déterminer la première distance D1, par exemple, par calcul et/ou par essais.

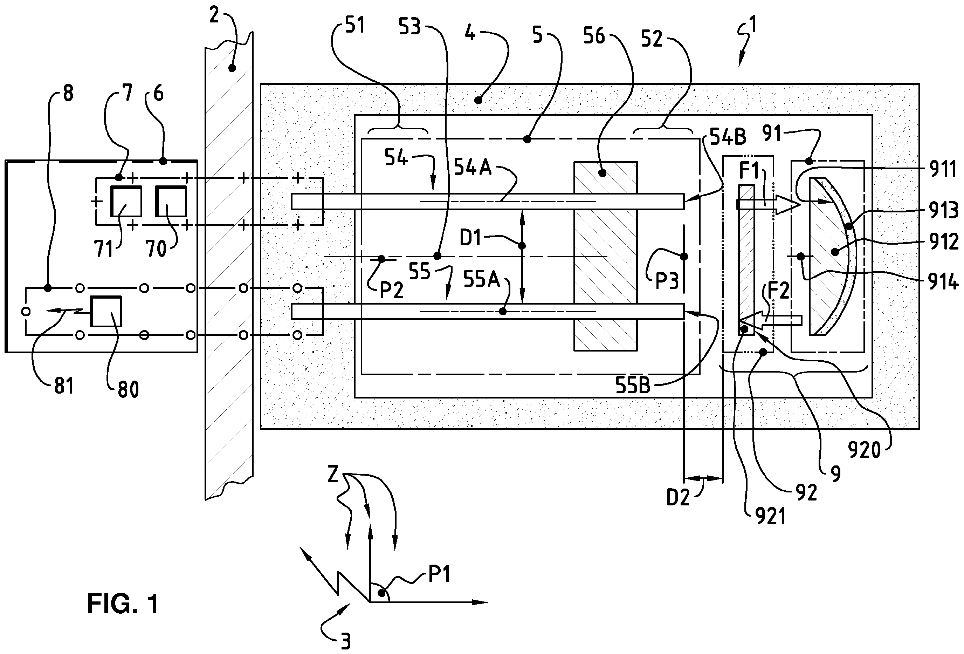

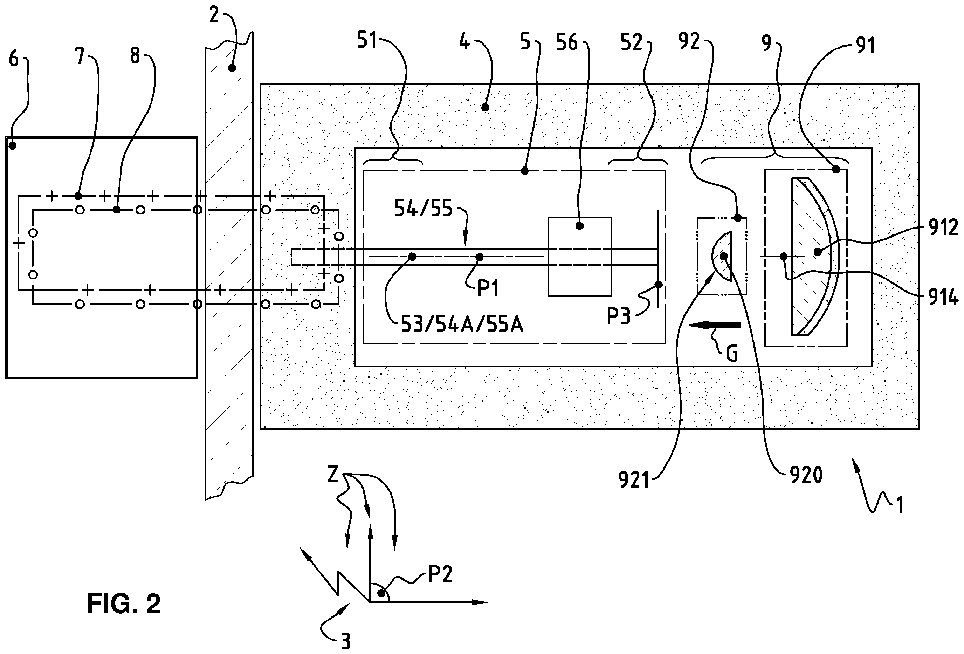

Le plan P1 est le plan de la figure 1 et le plan P2 est le plan de la figure 2.

Ces caractéristiques techniques permettent de limiter la sensibilité du dispositif 1 à la détection d'accélération dans un seul plan, à savoir le second plan P2.

C'est le principal résultat visé par l'invention.

Par ailleurs, ces deux parties peuvent avantageusement être utilisées pour constituer deux supports distincts de transmission d'information.

Précisément :
- d'une part, chacune desdites première partie 54 et seconde partie 55 de l'élément flexible 5 est constituée par au moins une fibre optique flexible 54,55,
- d'autre part,
   . la première partie 54 de l'élément flexible 5 est utilisée pour acheminer de la lumière de la première extrémité 51 de cet élément flexible 5 vers la seconde extrémité 52 dudit élément flexible 5, de manière telle que cette lumière sorte par une face terminale, dite face de sortie 54B, de cette première partie 54 et,
   . la seconde partie 55 est utilisée pour, par une face terminale dite face d'entrée 55B, recueillir de la lumière éclairant la seconde extrémité 52 de l'élément flexible 5 et l'acheminer dans la direction de la première extrémité 51 de cet élément flexible 5.

Ces caractéristiques techniques permettent de simplifier la construction du dispositif 1, car l'émission et la réception de la lumière peuvent être directement traitées par des appareils distincts, dont :
- un appareil 7 qui, dit premier appareil 7, est optiquement relié à la première partie 54 de l'élément flexible 5 de manière à émettre de la lumière dans ladite première partie 54,
- un autre appareil 8 qui, dit second appareil 8, est optiquement relié à la seconde partie 55 de l'élément flexible 5, de manière à traiter la lumière issue de la seconde partie 55.

Le premier appareil 7 et le second appareil 8 sont regroupés dans un même ensemble connu sous le nom de conditionneur optoélectronique.

Avantageusement, le premier appareil 7 et le second appareil 8 font partie d'un même ensemble constitué par l'installation 6 plus avant dite installation de détection du déplacement, notamment de vibration de la seconde extrémité 52 de l'élément flexible 5.

Ce premier appareil 7 et ce second appareil 8 existent en tant que tels et l'homme du métier est à même de concevoir leur connexion avec le dispositif 1 de l'invention.

De manière remarquable :
- au niveau de la première extrémité 51 de l'élément flexible 5, lesdites première partie 54 et seconde partie 55 sont liées au châssis 4 chacune d'une manière réalisant une liaison de type dit à encastrement, et
- au niveau de la seconde extrémité 52 de l'élément flexible 5, les deux parties 54, 55 sont liées à un organe d'entretoisement 56, chacune d'une manière réalisant également une liaison de type dit à encastrement.

Ces liaisons de type à encastrement garantissent que l'élément flexible se déforme uniquement dans le second plan P2.

La première partie 54 et de la seconde partie 55 ont des caractéristiques intrinsèques telles une certaine longueur, une section transversale prédéterminée, une flexibilité prédéterminée.

L'organe d'entretoisement 56 a lui même des caractéristiques intrinsèques, telle une masse prédéterminée.

L'organe d'entretoisement 56 se comporte comme une masse sismique dans un sismographe.

L'homme de l'art est à même de choisir les caractéristiques intrinsèques qui viennent d'être annoncées, en vue d'obtenir une sensibilité déterminée.

Du fait de leurs liaisons d'une part avec le châssis 4 et d'autre part avec l'organe d'entretoisement 56, la première partie 54 et la seconde partie 55 réalisent une poutre connue sous le nom de cantilever.

De façon à être encore plus performant, le dispositif 1 comprend, porté par le châssis 4, et ce, à distance D2 prédéterminée de la seconde extrémité 52 de l'élément flexible 5, dite seconde distance D2, un étage de réflexion 9 de lumière issue de la première partie 54 vers la seconde partie 55, et cet étage de réflexion 7 assure une fonction telle que la lumière qui franchit la face de sortie 54B de la première partie 54 sous la forme d'un faisceau F1, dit premier faisceau F1, est réfléchie et forme un autre faisceau, dit second faisceau F2, orienté vers un plan P3, dit troisième plan P3, qui passe à la fois par la face de sortie 54B de la première partie 54 et par la face d'entrée 55B de la seconde partie 55 de l'élément flexible 5, et ce lorsque le dispositif 1 n'est pas sollicité, le second faisceau F2 entrant ainsi par la face d'entrée 55B uniquement lorsque la première partie 54 et la seconde partie 55 de l'élément flexible 5 ont leurs axes longitudinaux 54A, 55A qui s'étendent sensiblement dans le premier plan P1.

L'homme du métier est à même de déterminer la seconde distance D2, par exemple, par calcul et/ou par essais.

Le faisceau F1 et le faisceau F2 ont chacun été symbolisé par une flèche.

Ces caractéristiques techniques permettent d'assurer la fonction de séparation recherchée et annoncée plus avant.

Lorsque le dispositif 1 n'est pas sollicité ou qu'il est insuffisamment sollicité et que l'élément flexible 5 ne vibre pas, le premier faisceau F1 issu de la face de sortie 54B du premier élément 54 est réfléchi et forme un second faisceau F2 qui rentre dans la seconde partie 55 de l'élément flexible, par sa face d'entrée 55B.

Bien entendu le premier faisceau F1 a des dimensions transversales prédéterminées et le second faisceau F2 a également des dimensions transversales prédéterminées.

Ainsi, lorsque l'élément flexible 5 vibre, le premier faisceau F1 issu de la face de sortie 54B du premier élément 54 est réfléchi et forme un second faisceau F2 qui ne peut rentrer en totalité (selon toute sa section transversale) dans la seconde partie 55 de l'élément flexible que lorsque la première partie 54 et la seconde partie 55 de l'élément flexible 5 ont leurs axes longitudinaux 54A, 55A qui s'étendent sensiblement dans le premier plan P1.

En conséquence, la quantité de lumière pouvant pénétrer dans la seconde partie 55 est proportionnelle au déplacement du second faisceau F2, ce déplacement étant lui-même proportionnel à l'amplitude de la vibration appliquée au support 2.

Par sa face d'entrée 55B, la seconde partie 55 de l'élément flexible 5 reçoit donc une quantité de lumière qui varie à la même fréquence que sa propre vibration.

C'est ainsi qu'on peut connaître la fréquence et l'amplitude de vibration, par évaluation de la quantité de lumière transmise vers l'appareil 8.

Pour que le dispositif fonctionne de manière optimale, il y a lieu que la face d'entrée 55B de la seconde partie 55 de l'élément flexible 5 reçoive une quantité de lumière qui varie de manière linéaire en fonction du déplacement de la seconde extrémité 52.

Notamment, le choix de la rigidité de l'élément flexible 5 (soit de la première partie 54 et de la seconde partie 55 de l'élément flexible 5) permet que cette condition soit satisfaite.

L'homme du métier sait choisir ce paramètre de rigidité en fonction du domaine de fréquence dans lequel le dispositif doit fonctionner, de manière telle que la variation de l'intensité de la lumière qui éclaire la face d'entrée 55B de la seconde partie 55 de l'élément flexible 5 évolue sensiblement linéairement entre une valeur minimale et une valeur maximale qui sont bien distinctes.

L'étage de réflexion 9 comprend un moyen fonctionnel 91, dit premier moyen fonctionnel 91 qui assure la réflexion de la lumière issue de la face de sortie 54B de la première partie 54 de l'élément flexible 55, vers la face d'entrée 55B de la seconde partie de l'élément flexible 5.

De manière notable, le premier moyen fonctionnel 91 comprend une surface de réflexion de la lumière, dite première surface 911, qui est de forme sensiblement sphérique.

Avantageusement, la première surface 911 est constituée par une surface de forme sensiblement sphérique constituant l'une des faces d'une lentille 912, dite première lentille 912, cette face étant revêtue d'une couche réfléchissante 913, telle une couche métallique.

La première lentille 912 est une lentille de distance focale déterminée et dont l'axe optique 914 est sensiblement aligné sur l'axe de référence 53.

La première lentille 912 est située à deux fois sa distance focale du troisième plan P3.

Cela permet de réaliser un dispositif 1 d'une luminosité et d'une sensibilité qui sont accrues par rapport aux dispositifs connus.

La lumière qui provient de la face de sortie 54B de la première partie 54 de l'élément flexible 5 est donc projetée sur la première surface 911 et focalisée vers la face d'entrée 55B de la seconde partie 55 de l'élément flexible 5.

Le fait que la première surface 911 soit sphérique permet de collecter le maximum de lumière et de la focaliser vers la face d'entrée 55B précitée.

Si l'on examine les propriétés du miroir sphérique constitué par la première surface 911, on note que si la face de sortie 54B de la première partie 54 se déplace selon une direction perpendiculaire au premier plan P1, par symétrie de la première surface 911, la face d'entrée 55B de la seconde partie 55 de l'élément flexible 5 se déplace en sens opposé.

Cette propriété double donc la sensibilité de mesure de l'arrangement optique proposé par l'invention.

De manière notable, l'étage de réflexion 9 comprend un autre moyen fonctionnel 92, dit second moyen fonctionnel 92 de dilatation du second faisceau F2 dans une direction parallèle au premier plan P1 de façon à éclairer la face d'entrée 55B de la seconde partie 55 de l'élément flexible 5 sur une dimension accrue sensiblement parallèlement au dit premier plan P1.

Selon une variante, non représentée, l'étage de réflexion 9 comprend un autre moyen fonctionnel 92, dit second moyen fonctionnel 92 :
- de dilatation du second faisceau F2 dans une direction parallèle au premier plan P1,
- de contraction du second faisceau F2 dans une direction perpendiculaire audit premier plan P1,
de façon à éclairer la face d'entrée 55B de la seconde partie 55 de l'élément flexible 5 sur une dimension réduite sensiblement perpendiculairement au premier plan et sur une dimension accrue sensiblement parallèlement au dit premier plan P1.

Par exemple, le premier faisceau F1 a une section transversale de forme sensiblement circulaire et le second faisceau F2 a une section transversale sensiblement ovale.

Ces caractéristiques techniques permettent d'augmenter la sélectivité du dispositif 1 dans le second plan P2.

De manière notable le second moyen fonctionnel 92 de l'étage de réflexion 9 comprend un dioptre de déformation transversale du second faisceau F2, lequel dioptre est interposé entre la première surface 911 et la face d'entrée 55B de la deuxième partie de l'élément flexible 5.

De manière tout aussi notable, le dioptre de déformation transversale que comprend le second moyen fonctionnel 92 est constitué par une lentille, dite seconde lentille 920, limitée par une surface cylindrique 921, dite seconde surface 921.

L'adoption de ces caractéristiques techniques permet de construire économiquement l'étage de réflexion 9.

De manière notable, le premier appareil 7 comprend une source lumineuse 70 et un étage de commande 71 de cette source lumineuse 70 qui règle l'intensité de la lumière émise sur une valeur cible prédéterminée.

Cette particularité technique permet, dans certaines limites, de s'affranchir d'un vieillissement de la source lumineuse utilisée pour produire la lumière.

De manière encore notable, le second appareil 8 comprend un étage de traitement 80 qui génère un signal de sortie 81 proportionnel à l'intensité de la lumière dans la seconde partie 55 de l'élément flexible 5, cette intensité de la lumière étant directement proportionnelle au mouvement du support 2.

## Revendications

1. Dispositif optique (1) de détection de l'accélération d'un support (2) qui est mobile par rapport à un référentiel (3),
ce référentiel (3) comprenant au moins une direction privilégiée (Z) de déplacement du support (2),
le dispositif (1) comprenant :
- un châssis (4) destiné à être fixé sur le support (2),
- un élément flexible (5), allongé et présentant deux extrémités opposées (51, 52), dont une première extrémité (51) qui est liée au châssis 4 et une seconde extrémité (52) qui, lors de la flexion de l'élément flexible (5) est libre de se déplacer par rapport à un axe de référence (53) s'étendant longitudinalement à l'élément flexible (5),
l'élément flexible (5) étant constitué de deux parties (54, 55) sensiblement identiques entre elles, dites première partie (54) et seconde partie (55), lesquelles :
- sont chacune de forme substantiellement allongée et sont flexibles,
- ont leurs axes longitudinaux (54A, 55A) qui s'étendent sensiblement dans un même plan (P1), dit premier plan (P1),
- sont constituées chacune par au moins une fibre optique flexible (54, 55),
la première partie (54) de l'élément flexible (5) étant utilisée pour acheminer de la lumière de la première extrémité (51) de cet élément flexible (5) vers la seconde extrémité (52) dudit élément flexible (5), de manière telle que cette lumière sorte par une face terminale, dite face de sortie (54B), de cette première partie (54), ce dispositif étant **caractérisé en ce que** :
- lesdites première partie (54) et seconde partie (55) de l'élément flexible (5) sont maintenues écartées d'une distance prédéterminée, dite première distance (D1), de manière à déterminer un plan privilégié de déformation, dit second plan (P2), approximativement perpendiculaire au premier plan (P1) et parallèle à l'axe de référence (53), et
- la seconde partie (55) est adaptée à recueillir, par une face terminale dite face d'entrée (55B), de la lumière provenant de la face de sortie (54B) éclairant la seconde extrémité (52) de l'élément flexible (5) et l'acheminer dans la direction de la première extrémité (51) de cet élément flexible (5),
- des moyens de détection (6) sont adaptées a déterminer le déplacement de la seconde extrémité (52) à partir de la quantité de lumière reçue par la face d'entrée (55B).

2. Dispositif optique selon la revendication 1, **caractérisé en ce que** :
- au niveau de la première extrémité (51) de l'élément flexible (5), lesdites première partie (54) et seconde partie (55) sont liées au châssis (4) chacune d'une manière réalisant une liaison de type dit à encastrement, et
- au niveau de la seconde extrémité (52) de l'élément flexible (5), les deux parties (54, 55) sont liées à un organe d'entretoisement (56), chacune d'une manière réalisant également une liaison de type dit à encastrement.

3. Dispositif optique selon la revendication 1 ou 2, **caractérisé en ce qu'**il comprend, porté par le châssis (4), et ce, à distance (D2) prédéterminée de la seconde extrémité (52) de l'élément flexible (5), dite seconde distance (D2), un étage de réflexion (9) de lumière issue de la première partie (54) vers la seconde partie (55), et cet étage de réflexion (7) assure une fonction telle que la lumière qui franchit la face de sortie (54B) de la première partie (54) sous la forme d'un faisceau (F1), dit premier faisceau (F1), est réfléchie et forme un autre faisceau, dit second faisceau (F2), orienté vers un plan (P3), dit troisième plan (P3), qui passe à la fois par la face de sortie (54B) de la première partie (54) et par la face d'entrée (55B) de la seconde partie 55 de l'élément flexible (5), et ce lorsque le dispositif (1) n'est pas sollicité, le second faisceau (F2) entrant ainsi par la face d'entrée (55B) uniquement lorsque la première partie (54) et la seconde partie (55) de l'élément flexible (5) ont leurs axes longitudinaux (54A, 55A) qui s'étendent sensiblement dans le premier plan (P1).

4. Dispositif optique selon la revendication 3, **caractérisé en ce que** l'étage de réflexion (9) comprend un moyen fonctionnel (91), dit premier moyen fonctionnel (91) qui assure la réflexion de la lumière issue de la face de sortie (54B) de la première partie (54) de l'élément flexible (55), vers la face d'entrée (55B) de la seconde partie de l'élément flexible (5).

5. Dispositif optique selon la revendication 4, **caractérisé en ce que** le premier moyen fonctionnel (91) comprend une surface de réflexion de la lumière, dite première surface (911), qui est de forme sensiblement sphérique.

6. Dispositif optique selon la revendication 5, **caractérisé en ce que** :
- la première surface (911) est constituée par une surface de forme sensiblement sphérique constituant l'une des faces d'une lentille (912), dite première lentille (912), cette face étant revêtue d'une couche réfléchissante (913),
- ladite première lentille (912) étant une lentille de distance focale déterminée et dont l'axe optique (914) est sensiblement aligné sur l'axe de référence (53),
- ladite première lentille (912) étant située à deux fois sa distance focale du troisième plan (P3).

7. Dispositif optique selon l'une des revendications 3 à 6, **caractérisé en ce que** l'étage de réflexion (9) comprend un autre moyen fonctionnel (92), dit second moyen fonctionnel (92) de dilatation du second faisceau (F2) dans une direction parallèle au premier plan (P1) de façon à éclairer la face d'entrée (55B) de la seconde partie (55) de l'élément flexible (5) sur une dimension accrue sensiblement parallèlement au dit premier plan (P1).

8. Dispositif optique selon l'une des revendications 3 à 6, **caractérisé en ce que** l'étage de réflexion (9) comprend un autre moyen fonctionnel (92), dit second moyen fonctionnel (92):
- de dilatation du second faisceau (F2) dans une direction parallèle au premier plan (P1),
- de contraction du second faisceau (F2) dans une direction perpendiculaire audit premier plan (P1),
de façon à éclairer la face d'entrée (55B) de la seconde partie (55) de l'élément flexible (5) sur une dimension réduite sensiblement perpendiculairement au premier plan et sur une dimension accrue sensiblement parallèlement au dit premier plan (P1).

9. Dispositif optique selon la revendication 7 ou 8, **caractérisé en ce que** le second moyen fonctionnel (92) de l'étage de réflexion (9) comprend un dioptre de déformation transversale du second faisceau (F2), lequel dioptre est interposé entre la première surface (911) et la face d'entrée (55B) de la deuxième partie de l'élément flexible (5).

10. Dispositif optique selon la revendication 7 ou 8, **caractérisé en ce que** le dioptre de déformation transversale que comprend le second moyen fonctionnel (92) est constitué par une lentille, dite seconde lentille (920), limitée par une surface cylindrique (921), dite seconde surface (921).

11. Dispositif optique selon l'une des revendications précédentes, **caractérisé en ce qu'**il comprend un appareil (7) qui, dit premier appareil (7), est optiquement relié à la première partie (54) de l'élément flexible (5) de manière à émettre de la lumière dans ladite première partie (54), ce premier appareil (7) comprenant une source lumineuse (70) et un étage de commande (71) de cette source lumineuse (70) qui règle l'intensité de la lumière émise sur une valeur cible prédéterminée.

12. Dispositif optique selon l'une des revendications précédentes, **caractérisé en ce qu'**il comprend un autre appareil (8) qui, dit second appareil (8), est optiquement relié à la seconde partie (55) de l'élément flexible (5), de manière à traiter la lumière issue de la seconde partie (55), ce second appareil (8) comprenant un étage de traitement (80) qui génère un signal de sortie (81) proportionnel à l'intensité de la lumière dans la seconde partie (55) de l'élément flexible (5), cette intensité de la lumière étant directement proportionnelle au mouvement de la seconde extrémité (52) de l'élément flexible (5).

## Patentansprüche

1. Optische Einrichtung (1) zur Bestimmung der Beschleunigung eines Trägers (2), welcher relative zu einem Referenzrahmen (3) bewegbar ist,
der Referenzrahmen (3) umfasst zumindest eine bevorzugte Richtung (Z) der Verschiebung des Trägers (2),
die Einrichtung (1) umfasst:
- einen Rahmen (4), eingerichtet, um an dem Träger (2) befestigt zu sein,
- ein flexibles Element (5), länglich und zwei entgegengesetzte Enden (51, 52) aufweisend, welche ein erstes Ende (51), das mit dem Rahmen (4) verbunden ist, und ein zweites Ende (52) sind, das sich durch Biegung des flexiblen Elements (5) relativ zu einer Referenzachse (53) verschieben kann, welche sich longitudinal entlang des flexiblen Elements (5) erstreckt,
wobei sich das flexible Element (5) aus zwei im Wesentlichen identischen Teilen (54, 55) zusammensetzt, bezeichnet als erster Teil (54) und zweiter Teil (55), welche:
- jeweils von im Wesentlichen länglicher Form und flexible sind,
- ihre Längsachsen (54A, 55A) aufweisen, die sich im Wesentlichen in einer selben Ebene (P1) erstrecken, bezeichnet als erste Ebene (P1),
- jeweils aus mindestens einer flexiblen optischen Faser (54, 55) gefertigt sind,
wobei der erste Teil (54) des flexiblen Elements (5) zum Übermitteln des Lichts von dem ersten Ende (51) des flexiblen Elements (5) zu dem zweiten Ende (52) des flexiblen Elements (5) eingesetzt ist, so dass das Licht aus einer Endfläche des ersten Teils (54) austritt, bezeichnet als Austrittsfläche (54B),
die Einrichtung ist **dadurch gekennzeichnet, dass**:
- der erste Teil (54) und zweite Teil (55) des flexiblen Elements (5) voneinander um eine vorbestimmte Distanz, bezeichnet als erste Distanz (D1), beabstandet gehalten sind, so dass eine bevorzugte Deformationsebene, bezeichnet als zweite Ebene (P2), in etwa senkrecht zu der ersten Ebene (P1) und parallel zu der Referenzachse (53) bestimmt ist, und
- der zweite Teil (55) eingerichtet ist, um über eine Endfläche, bezeichnet als Eintrittsfläche (55B), das Licht zu sammeln, welches von der Austrittsfläche (54B) kommt und das zweite Ende (52) des flexiblen Elements (5) beleuchtet und um es in die Richtung des ersten Endes (51) des flexiblen Elements (5) zu übertragen,
- Detektionsmittel (6) eingerichtet sind, um die Verschiebung des zweiten Endes (52) zu bestimmen, ausgehend von der Menge an Licht, empfangen von der Eintrittsfläche (55B).

2. Optische Einrichtung nach Anspruch 1, **dadurch gekennzeichnet, dass**:
- an dem ersten Ende (51) des flexiblen Elements (5), der erste Teil (54) und zweite Teil (55) jeweils mit dem Rahmen (4) verbunden sind, so dass eine Verbindung des Typs gebildet ist, bezeichnet als starre Befestigung, und
- an dem zweiten Ende (52) des flexiblen Elements (5), die zwei Teile (54, 55) mit einem aussteifenden Element (56) verbunden sind, jeweils so dass eine Verbindung des Typs erreicht ist, bezeichnet als starre Befestigung.

3. Optische Einrichtung nach Anspruch 1 oder 2, **dadurch gekennzeichnet, dass** sie, getragen von dem Rahmen (4) und in einem vorbestimmten Abstand (D2) von dem zweiten Ende (52) des flexiblen Elements (5), dem zweiten Abstand (D2), eine Reflexionsstufe (9) des Lichts umfasst, welches von dem ersten Teil (54) zu dem zweiten Teil (55) gelangt, und die Reflexionsstufe (7) <sic. (9)> eine Funktion vorsieht, um das Licht, welches die Austrittfläche (54B) des ersten Teils (54) in Form eines Strahls (F1) passiert, bezeichnet als erster Strahl (F1), reflektiert wird und einen anderen Strahl formt, bezeichnet als zweiter Strahl (F2), welcher zu einer Ebene (P3) orientiert ist, bezeichnet als dritte Ebene (P3), und welcher zeitgleich die Austrittfläche (54B) des ersten Teils (54) und die Eintrittsfläche (55B) des zweiten Teils (55) des flexiblen Elements (5) passiert, und dadurch dass wenn die Einrichtung (1) nicht unter Spannung steht, der zweite Strahl (F2) nur dann in die Eintrittsfläche (55B) eintritt, wenn der erste Teil (54) und der zweite Teil (55) des flexiblen Elements (5) ihre longitudinalen Achsen (54A, 55A) aufweisen, welche sich im Wesentlichen in der erste Ebenen (P1) erstrecken.

4. Optische Einrichtung nach Anspruch 3, **dadurch gekennzeichnet, dass** die Reflexionsstufe (9) ein funktionales Mittel (91) umfasst, bezeichnet als erstes funktionales Mittel (91), welches die Reflexion des Lichts gewährleistet, welches von der Austrittsfläche (54B) des ersten Teils (54) des flexiblen Elements (5) zu der Eintrittsfläche (55B) des zweiten Teils des flexiblen Elements (5) strahlt.

5. Optische Einrichtung nach Anspruch 4, **dadurch gekennzeichnet, dass** das erste funktionale Mittel (91) eine Lichtreflexionsfläche umfasst, bezeichnet als erste Fläche (911), welche im Wesentlichen kugelförmig ist.

6. Optische Einrichtung nach Anspruch 5, **dadurch gekennzeichnet, dass**:
- die erste Fläche (911) sich aus einer im Wesentlichen kugelförmigen Fläche zusammensetzt, welche eine der Flächen einer Linse (912) darstellen, bezeichnet als erste Linse (912), wobei die Fläche von einer reflektierenden Schicht (913) bedeckt ist,
- die erste Linse (912) eine Linse mit einer vorbestimmten Brennweite ist und dessen optische Achse (914) im Wesentlichen entlang der Referenzachse (53) verläuft,
- die erste Linse (912) von der dritten Ebene (P3) in zweifacher Brennweite angeordnet ist.

7. Optische Einrichtung nach einem der Ansprüche 3 bis 6, **dadurch gekennzeichnet, dass** die Reflexionsstufe (9) ein anderes funktionales Mittel (92) umfasst, bezeichnet als zweites funktionales Mittel (92), um den zweiten Strahl (F2) in einer Richtung parallel zu der ersten Ebene (P1) aufzuweiten, um so die Eintrittsfläche (55B) des zweiten Teils (55) des flexiblen Elements (5) in einem vergrösserten Ausmass im Wesentlichen parallel zu der ersten Ebene (P1) zu beleuchten.

8. Optische Einrichtung nach einem der Ansprüche 3 bis 6, **dadurch gekennzeichnet, dass** die Reflexionsstufe (9) ein weiteres funktionales Mittel (92) umfasst, bezeichnet als zweites funktionales Mittel (92):
- zur Aufweitung des zweiten Strahl (F2) in einer Richtung parallel zu der ersten Ebene (P1),
- zur Verengung des zweiten Strahls (F2) in einer Richtung senkrecht zu der ersten Ebene (P1),
in einer Weise, um die Eintrittsfläche (55B) des zweiten Teils (55) des flexiblen Elements (5) in einem reduzierten Ausmass im Wesentlichen senkrecht zu der ersten Ebene und in einem vergrösserten Ausmass im Wesentlichen parallel zu der ersten Ebene (P1) zu beleuchten.

9. Optische Einrichtung nach Anspruch 7 oder 8, **dadurch gekennzeichnet, dass** das zweite funktionale Mittel (92) der Reflexionsstufe (9) ein Brechungsmittel zur Querkontraktion des zweiten Strahls (F2) umfasst, wobei das Brechungsmittel zwischen der ersten Fläche (911) und der Eintrittsfläche (55B) des zweiten Teils des flexiblen Elements (5) angeordnet ist.

10. Optische Einrichtung nach Anspruch 7 oder 8, **dadurch gekennzeichnet, dass** das Brechungsmittel für Querkontraktion, welches das zweite funktionale Mittel (92) umfasst, von einer Linse gebildet ist, bezeichnet als zweite Linse (920), begrenzt von einer zylindrischen Fläche (921), bezeichnet als zweite Fläche (921)

11. Optische Einrichtung nach einem der vorhergehenden Ansprüche, **dadurch gekennzeichnet, dass** sie eine Vorrichtung (7) umfasst, bezeichnet als erste Vorrichtung (7), welche optisch mit dem ersten Teil (54) des flexiblen Elements (5) verbunden ist, um Licht in den ersten Teil (54) zu emittieren, wobei die erste Vorrichtung (7) eine Lichtquelle (70) und eine Steuereinheit (71) der Lichtquelle (70) umfasst, welche die Intensität des emittierten Lichts in Bezug auf einen vorbestimmten Zielwert einstellt.

12. Optische Einrichtung nach einem der vorhergehenden Ansprüche, **dadurch gekennzeichnet, dass** sie eine andere Vorrichtung (8) umfasst, bezeichnet als zweite Vorrichtung (8), welche optisch mit dem zweiten Teil (55) des flexiblen Elements (5) verbunden ist, um das Licht aufzubereiten, welches von dem zweiten Teil (55) kommt, wobei die zweite Vorrichtung (8) eine Prozesseinheit (80) umfasst, welche ein Ausgangssignal (81) proportional zu der Intensität des Lichts in dem zweiten Teil (55) des flexiblen Elements (5) erzeugt, wobei die Lichtintensität direkt proportional zu der Bewegung des zweiten Endes (52) des flexiblen Elementes (5) ist.

## Claims

1. Optical device (1) for detecting the acceleration of a support (2) which is movable relative to a frame of reference (3),
this frame of reference (3) comprising at least one preferential direction (Z) of displacement of the support (2),
the device (1) comprising:
- a frame (4) intended to be fixed on the support (2),
- a flexible element (5), elongated and having two opposite ends (51, 52), which are a first end (51), which is connected to the frame 4, and a second end (52) which, upon flexion of the flexible element (5), is free to displace itself relative to a reference axis (53) extending longitudinally to the flexible element (5),
the flexible element (5) being composed of two parts (54, 55) substantially identical to one another, referred to as first part (54) and second part (55), which:
- are each of substantially elongated shape and are flexible,
- have their longitudinal axes (54A, 55A) which extend substantially in a same plane (P1), referred to as first plane (P1),
- are each made up of at least one flexible optical fibre (54, 55),
the first part (54) of the flexible element (5) being used to transmit the light from the first end (51) of this flexible element (5) toward the second end (52) of said flexible element (5), in such a manner that this light exits by an end face, referred to as exit face (54B), of this first part (54),
this device being **characterized in that**:
- the said first part (54) and second part (55) of the flexible element (5) are maintained spaced apart by a predetermined distance, referred to as first distance (D1), in a way so as to determine a preferential plane of deformation, referred to as second plane (P2), approximately perpendicular to the first plane (P1) and parallel to the reference axis (53), and
- the second part (55) is adapted to collect, by an end face referred to as entrance face (55B), the light coming from the exit face (54B) illuminating the second end (52) of the flexible element (5) and transmit it in the direction of the first end (51) of this flexible element (5),
- means of detection (6) are adapted to determine the displacement of the second end (52) starting from the quantity of light received by the entrance face (55B).

2. Optical device according to claim 1, **characterized in that**:
- at the first end (51) of the flexible element (5), the said first part (54) and second part (55) are each connected to the frame (4) in a manner achieving a connection of the type referred to as rigid fixing, and
- at the second end (52) of the flexible element (5), the two parts (54, 55) are connected to a bracing element (56), each in a manner so as to also achieve a connection of the type referred to as rigid fixing.

3. Optical device according to claim 1 or 2, **characterized in that** it comprises, borne by the frame (4), and this, at a predetermined distance (D2) from the second end (52) of the flexible element (5), said second distance (D2), a reflection stage (9) of light coming from the first part (54) toward the second part (55), and this reflection stage (7) <sic. (9)> ensures a function such that the light which crosses the exit face (54B) of the first part (54) in the form of a beam (F1), referred to as first beam (F1), is reflected and forms another beam, referred to as second beam (F2), oriented toward a plane (P3), referred to as third plane (P3), which passes at the same time through the exit face (54B) of the first part (54) and through the entrance face (55B) of the second part 55 of the flexible element (5), and this when the device (1) is not stressed, the second beam (F2) thus entering through the entrance face (55B) only when the first part (54) and the second part (55) of the flexible element (5) have their longitudinal axes (54A, 55A) extending substantially in the first plane (P1).

4. Optical device according to claim 3, **characterized in that** the reflection stage (9) comprises a functional means (91), referred to as first functional means (91) which ensures the reflection of the light flowing from the exit face (54B) of the first part (54) of the flexible element (55), towards the entrance face (55B) of the second part of the flexible element (5).

5. Optical device according to claim 4, **characterized in that** the first functional means (91) comprises a light reflection surface, referred to as first surface (911), which is of substantially spherical shape.

6. Optical device according to claim 5, **characterized in that**:
- the first surface (911) is composed of a surface of substantially spherical shape constituting one of the faces of a lens (912), referred to as first lens (912), this face being covered with a reflective layer (913),
- the said first lens (912) being a lens of predetermined focal distance and the optical axis (914) of which is substantially aligned on the reference axis (53),
- the said first lens (912) being situated at twice its focal distance from the third plane (P3).

7. Optical device according to one of the claims 3 to 6, **characterized in that** the reflection stage (9) comprises another functional means (92), referred to as second functional means (92) of expansion of the second beam (F2) in a direction parallel to the first plane (P1) in a manner so as to illuminate the entrance face (55B) of the second part (55) of the flexible element (5) on an increased dimension substantially parallel to the said first plane (P1).

8. Optical device according to one of the claims 3 to 6, **characterized in that** the reflection stage (9) comprises another functional means (92), referred to as second functional means (92):
- of expansion of the second beam (F2) in a direction parallel to the first plane (P1),
- of contraction of the second beam (F2) in a direction perpendicular to the said first plane (P1),
in a manner so as to illuminate the entrance face (55B) of the second part (55) of the flexible element (5) on a reduced dimension substantially perpendicularly to the first plane and on an increased dimension substantially parallel to the said first plane (P1).

9. Optical device according to claim 7 or 8, **characterized in that** the second functional means (92) of the reflection stage (9) comprises a refractive means of transverse deformation of the second beam (F2), which refractive means is interposed between the first surface (911) and the entrance face (55B) of the second part of the flexible element (5).

10. Optical device according to claim 7 or 8, **characterized in that** the refractive means of transverse deformation that the second functional means (92) comprises is constituted by a lens, referred to as second lens (920), bounded by a cylindrical surface (921), referred to as second surface (921).

11. Optical device according to one of the preceding claims, **characterized in that** it comprises an apparatus (7) which, referred to as first apparatus (7), is optically connected to the first part (54) of the flexible element (5) in a manner so as to emit light in the said first part (54), this first apparatus (7) comprising a light source (70) and a control stage (71) of this light source (70) which adjusts the intensity of the emitted light with respect to a predetermined target value.

12. Optical device according to one of the preceding claims, **characterized in that** it comprises another apparatus (8) which, referred to as second apparatus (8), is optically connected to the second part (55) of the flexible element (5), in a manner so as to treat the light coming from the second part (55), this second apparatus (8) comprising a processing stage (80) which generates an output signal (81) proportional to the intensity of light in the second part (55) of the flexible element (5), this light intensity being directly proportional to the movement of the second end (52) of the flexible element (5).
